Europäisches Patentamt

European Patent Office

Office européen des brevets

(11) Numéro de publication : **0 101 394**
**B1**

# (12) FASCICULE DE BREVET EUROPÉEN

(45) Date de publication du fascicule du brevet :
16.04.86

(21) Numéro de dépôt : **83420137.8**

(22) Date de dépôt : **10.08.83**

(51) Int. Cl.⁴ : **C 22 B 60/02**, C 22 B 59/00, C 01 B 15/047

(54) **Procédé de valorisation de l'uranium et des terres rares contenus dans de l'UF4 impur provenant de l'extraction de l'uranium de l'acide phosphorique.**

(30) Priorité : 12.08.82 FR 8214353

(43) Date de publication de la demande :
22.02.84 Bulletin 84/08

(45) Mention de la délivrance du brevet :
16.04.86 Bulletin 86/16

(84) Etats contractants désignés :
**BE GB IT NL SE**

(56) Documents cités :
**FR-A- 1 293 966**
**FR-A- 1 365 722**
**FR-A- 2 082 514**
**FR-A- 2 429 746**
**FR-A- 2 435 444**
**US-A- 3 037 840**
**US-A- 3 219 408**

(73) Titulaire : **URANIUM PECHINEY UGINE KUHLMANN**
**23 rue Balzac**
**F-75008 Paris (FR)**

(72) Inventeur : **Floreancig, Antoine**
**Chemin du Clos Chipier**
**F-69230 Saint Genis Laval (FR)**

(74) Mandataire : **Gaucherand, Michel et al**
**PECHINEY UGINE KUHLMANN 28 rue de Bonnel**
**F-69433 Lyon Cedex 3 (FR)**

Jouve, 18, rue St-Denis, 75001 Paris, France

## Description

L'invention concerne un procédé de valorisation de l'uranium et des terres rares contenus dans le tétrafluorure d'uranium impur provenant de la récupération de l'uranium de l'acide phosphorique qui consiste à dissoudre selon deux étapes le tétrafluorure d'uranium impur au moyen d'une solution d'acide nitrique en présence d'un composé d'aluminium, puis à extraire le nitrate d'uranyle en mettant en contact le milieu aqueux provenant de la dissolution de $UF_4$ et un solvant d'extraction contenant un ester phosphorique.

Il est déjà connu depuis longtemps d'utiliser un solvant organique contenant un ester phosphorique pour extraire le nitrate d'uranyle d'une solution impure le contenant. C'est ainsi, par exemple, que les brevets américains 2 848 300 et 2 979 379 décrivent de tels procédés qui consistent à extraire par étape le nitrate d'uranyle par du tributylphosphate contenu dans un solvant organique.

Mais, lorsqu'un tel procédé est appliqué à l'extraction du nitrate d'uranyle obtenu par dissolution d'un $UF_4$ impur au moyen d'acide nitrique et d'un complexant des ions fluorures constitués par un composé de l'aluminium, on constate que, lors de la mise en contact de la phase organique extractante et de la phase minérale à extraire, il se forme une émulsion stable empêchant la récupération aisée de la phase organique chargée de nitrate d'uranyle.

La demanderesse, s'étant heurtée à de multiples reprises à cette difficulté après dissolution de l'$UF_4$ au moyen d'acide nitrique en présence d'un composé de l'aluminium telle qu'elle est décrite dans le brevet français 2 429 746, a poursuivi ses recherches et a trouvé que la séparation après contact des phases organique et aqueuse était rendue aisée quand la dissolution acide de l'$UF_4$ était réalisée en deux étapes.

Le procédé selon l'invention de valorisation de l'uranium et des terres rares contenus dans un tétrafluorure d'uranium impur consistant à le dissoudre à chaud dans un milieu nitrique en présence d'un composé d'aluminium, à utiliser un solvant organique d'extraction du nitrate d'uranyle contenant un ester phosphorique et à séparer de la phase aqueuse désuraniée le solvant chargé de nitrate d'uranyle à valoriser, se caractérise en ce que :

a) on effectue la dissolution de l'$UF_4$ en deux étapes à une température comprise entre 60 et 110 °C et sous agitation pendant au moins 0,5 h pour chacune des étapes :

la première étape consistant à introduire une quantité d'acide nitrique au plus égale à 0,9 fois la quantité cumulée dans les deux étapes, une quantité du composé d'aluminium au plus égale à 0,95 fois la quantité stœchiométrique correspondant à la formation de $AlF_6^{3-}$ pour le fluor engagé,

la deuxième étape consistant à introduire une quantité d'acide nitrique telle que l'acidité libre à l'issue de la deuxième étape est d'au moins 0,5 mole de $HNO_3$ par litre de solution, une quantité du composé d'aluminium telle que la quantité cumulée dans les deux étapes est au moins égale à la quantité stœchiométrique correspondant à la formation de $AlF_6^{3-}$,

b) on extrait le nitrate d'uranyle en mettant en contact le milieu aqueux provenant de la dissolution de $UF_4$ et le solvant d'extraction du nitrate d'uranyle contenant l'ester phosphorique.

Selon le procédé de l'invention, le tétrafluorure d'uranium traité provient de la récupération de l'uranium de l'acide phosphorique par extraction au moyen d'un solvant approprié et réextraction de l'uranium au moyen d'acide fluorhydrique, tel que décrit par exemple dans le brevet américain 2 866 680 qui préconise l'usage de l'acide octyl-pyrophosphorique comme solvant d'extration de l'uranium.

Comme cela a déjà été exprimé, lors de ses recherches, la demanderresse ayant voulu extraire le nitrate d'uranyle résultant de la dissolution du tétrafulorure d'uranium impur, a essayé d'appliquer le procédé connu de l'extraction du nitrate d'uranyle par un solvant organique contenant un ester phosphorique, mais elle s'est heurtée à la formation d'une émulsion stable ne permettant pas la récupération du nitrate d'uranyle.

La demanderesse, devant cette difficulté, a cherché à aménager les conditions préconisées par le procédé connu, sans jamais aboutir à l'obtention d'une émulsion facilement séparable. Dès lors, ayant poursuivi ses recherches, la demanderesse a trouvé que l'obtention d'une émulsion aisément séparable, réalisée par la mise en contact de la phase aqueuse contenant le nitrate d'uranyle et du solvant organique contenant un ester phosphorique, était étroitement liée aux conditions de dissolution de l'$UF_4$ utilisé, ces conditions consistant à traiter à chaud l'$UF_4$ impur en deux étapes au moyen d'acide nitrique et d'un composé de l'aluminium.

Selon le procédé de l'invention, la quantité cumulée dans les deux étapes du composé d'aluminium, pour complexer le fluor provenant de l'$UF_4$, doit être au moins égale à la quantité stœchiométrique correspondant à la formation de $AlF_6^{3-}$ et, préférentiellement comprise entre 1,15 et 1,50 fois cette stœchiométrie.

La quantité cumulée dans les deux étapes de l'acide nitrique nécessaire à la dissolution de l'$UF_4$ impur est telle que l'acidité libre à l'issue de la deuxième étape doit être d'au moins 0,5 mole de $HNO_3$ par litre de solution et, préférentiellement comprise entre 1 et 5 moles par litre de solution.

La quantité de composé d'aluminium introduite lors de la réalisation de la première étape est au plus égale à 0,95 fois la quantité stœchiométrique correspondant à la formation de $AlF_6^{3-}$ pour le fluor engagé mais, préférentiellement choisie dans l'intervalle de 0,60 à 0,90 fois ladite quantité stœchiométrique.

La quantité d'acide nitrique introduite lors de la réalisation de la première étape est au plus égale à 0,9 fois la quantité cumulée d'acide nitrique pour solubiliser l'uranium de l'$UF_4$ et, préférentiellement comprise entre 0,5 et 0,75 fois cette quantité cumulée.

La température nécessaire à la mise en solution de l'$UF_4$ est choisie, pour les deux étapes, dans l'intervalle 60 °C à 110 °C et, préférentiellement dans l'intervalle 70 °C à 90 °C.

Le temps d'agitation, lors de l'exécution de la première étape, est choisi de telle manière que les particules de fluorure d'aluminium hydraté puissent atteindre une dimension suffisante. Ce temps, qui doit être d'au moins trente minutes, est généralement choisi entre une heure et douze heures et, préférentiellement entre une heure et cinq heures.

Le temps d'agitation, lors de l'exécution de la deuxième étape, a moins d'influence sur la séparation des phases liquides lors de l'extraction du nitrate d'uranyle, mais il doit être suffisant pour permettre la solubilisation de l'uranium. Pour ce faire, il est généralement choisi entre 0,5 heure et douze heures et, préférentiellement entre une et cinq heures.

Le composé d'aluminium utilisé pour complexer les ions fluorures provenant du tétrafluorure d'uranium est généralement choisi parmi le chlorure d'aluminium, le nitrate d'aluminium, l'alumine, l'hydroxyde d'aluminium ainsi que par les composés de l'aluminium capables de former un complexe soluble de fluorure d'aluminium. En pratique, le composé d'aluminium est, dans la majorité des cas, l'alumine ou l'hydroxyde d'aluminium, ces deux produits étant les plus disponibles industriellement.

Quand la dissolution de l'$UF_4$ en deux étapes est achevée, le milieu aqueux en résultant est, en général, refroidi à une température comprise entre 20 °C et 80 °C et, préférentiellement entre 30 °C et 60 °C.

Plus, le milieu aqueux refroidi est mis en contact avec un solvant d'extraction du nitrate d'uranyle.

Selon une variante, le milieux aqueux issu de la dissolution de $UF_4$ est soumis à une séparation par filtration des phases liquide et solide avant d'être mis en contact avec le solvant d'extraction du nitrate d'uranyle.

Le solvant d'extraction du nitrate d'uranyle est une solution d'ester phosphorique dans un hydrocarbure, à raison de 20 à 50 % mais, de préférence de 30 à 40 % en volume. L'ester phosphorique est préférentiellement le tributylphosphate. L'hydrocarbure utilisé est préférentiellement choisi parmi l'hexane, le dodécane et les kérozènes provenant des coupes de distillation du pétrole.

La mise en contact du milieu aqueux contenant le nitrate d'uranyle et du solvant d'extraction est généralement réalisée à contre-courant pour obtenir un bon rendement d'extraction du nitrate d'uranyle et une meilleure séparation dudit nitrate et des terres rares.

Après séparation, le solvant d'extraction contenant le nitrate d'uranyle est ensuite traité par de l'eau ou par une solution aqueuse contenant une faible quantité d'acide nitrique pour extraire le nitrate d'uranyle.

Le milieu aqueux désuranié contenant les terres rares, est traité par un agent alcalin, provoquant leur précipitation.

Dès lors et, selon l'invention, on obtient un concentré solide de terres rares valorisables selon les moyens connus.

L'invention sera mieux comprise grâce aux exemples cités à titre illustratif.

Exemple 1

Cet exemple illustre un procédé d'extraction du nitrate d'uranyle selon l'art antérieur, comportant la dissolution en une étape de tétrafluorure d'uranium impur au moyen d'acide nitrique en présence de $Al_2O_3$, $3H_2O$, puis du milieu résultant par une solution de tributylphosphate dans du dodécane.

Pour ce faire, on a traité 100 kg d'$UF_4$ impur provenant de la récupération de l'uranium de l'acide phosphorique au moyen de l'acide octyl-pyrophosphorique dont la réextraction a été faite par l'intermédiaire de l'acide fluorhydrique.

Le tétrafluorure d'uranium impur, non séché, avait la composition suivante en pour cent en poids :

| | |
|---|---|
| Uranium | : 16,3 % |
| Fluor lié | : 9,5 % |
| Fer | : 0,5 % |
| Calcium | : 0,5 % |
| Phosphore | : 0,1 % |
| HF libre | : 7,9 % |
| Ytrium | : 1,9 % |
| Thorium | : 0,9 % |
| Terres rares | : 1,6 % |
| Humidité et divers | : 60,8 % |

Cette quantité d'$UF_4$ a été placée dans un réacteur puis a été traitée à une température de 90 °C pendant 5 heures au moyen d'acide nitrique commercial à 55 % de $HNO_3$ et de $Al_2O_3$, $3H_2O$. La quantité d'alumine utilisée était de 1,25 fois la stœchiométrie correspondant à la formation de $AlF_6^{3-}$ et la quantité d'acide nitrique était de 6 moles d'acide nitrique par mole d'alumine introduite. Dans ces conditions, l'acidité libre en fin de réaction était de 2,6 moles de $HNO_3$ par litre.

On a alors traité à contre-courant le milieu aqueux résultant de la dissolution de l'$UF_4$ dans une batterie de quatre mélangeurs-décanteurs par un solvant d'extraction formé de 30 % en volume de tributylphosphate dans du dodécane. On a alors obtenu une émulsion de forte stabilité, qui a exigé de travailler avec des débits du milieux à extraire et du solvant d'extraction très faibles, de l'ordre de 0,9 litre par heure pour le milieu aqueux contenant le nitrate d'uranyle, et de l'ordre de 1,5 litre par heure pour le solvant d'extraction, représentant un débit spécifique cumulé de 0,3 mètre cube par heure et par mètre carré de décanteur.

Exemple 2

Cet exemple illustre le procédé d'extraction du nitrate d'uranyle selon l'invention, comportant la dissolution en deux étapes du même tétrafluorure d'uranium que celui utilisé dans l'exemple 1, puis l'extraction du nitrate d'uranyle au moyen du même solvant que celui utilisé dans ledit exemple.

La dissolution en deux étapes a été réalisée de la manière suivante :

dans la première étape de dissolution, on a introduit 100 kg de l'UF$_4$ impur dans le même réacteur que l'exemple 1 avec une quantité d'alumine égale à 0,8 fois la stœchiométrie correspondant à la formation de AlF$_6^{3-}$ et une quantité d'acide nitrique correspondant à 6 moles d'acide par mole d'alumine introduite. Le milieu réactionnel a été maintenu sous agitation pendant 3 heures à une température de 90 °C ;

dans la deuxième étape de dissolution, on a introduit dans le réacteur une quantité d'alumine égale à 0,45 fois la stœchiométrie correspondant à la formation de AlF$_6^{3-}$ et une quantité d'acide nitrique égale à 6 moles d'acide par mole d'alumine introduite dans cette deuxième étape. Le milieu réactionnel a été maintenu sous agitation à la température de 90 °C pendant 2 heures. L'acidité libre en fin de réaction était de 2,55 moles d'acide nitrique par litre.

On a alors traité à contre-courant le milieu aqueux résultant de la dissolution de l'UF$_4$ dans la même batterie de quatre mélangeurs-décanteurs que celle utilisée dans l'exemple 1, par un solvant d'extraction formé de 30 % en volume de tributylphosphate dans du dodécane. On a alors obtenu une émulsion de faible stabilité qui a permis de travailler, toutes les autres conditions étant identiques à celles de l'exemple 1, avec des débits du milieu à extraire et du solvant d'extraction de l'ordre de 8 litres par heure pour le milieu aqueux contenant le nitrate d'uranyle, et de l'ordre de 13,5 litres par heure pour le solvant d'extraction, représentant un débit spécifique cumulé de 2,7 mètres cubes par heure et par mètre carré du décanteur.

Selon le procédé de l'invention et par comparaison avec l'exemple 1, il apparaît que le même appareillage d'extraction par solvant a une capacité de traitement améliorée dans un rapport 9/1.

Le solvant d'extraction, chargé en nitrate d'uranyle qui a été aisément séparé, a été traité à contre-courant par 15 litres à l'heure d'une solution aqueuse légèrement acidifiée, contenant 0,01 mole de HNO$_3$ par litre, dans une batterie de six mélangeurs-décanteurs. On a obtenu une solution purifiée de nitrate d'uranyle contenant moins de 1 000 ppm de terres rares par rapport à l'uranium contenu.

Le milieu aqueux désuranié était traité par de la chaux à pH 7, ce qui a provoqué la précipitation quasi complète des terres rares et des impuretés. La séparation dudit précipité conduisait à un concentré de terres rares à valoriser.

**Revendications**

1. Procédé de valorisation de l'uranium et des terres rares contenus dans le tétrafluorure d'uranium impur provenant de la récupération de l'uranium de l'acide phosphorique, consistant à le dissoudre à chaud dans un milieu nitrique en présence d'un composé d'aluminium, à traiter la solution obtenue par un solvant organique d'extraction du nitrate d'uranyle contenant un ester phosphorique et à séparer de la phase aqueuse désuraniée le solvant chargé de nitrate d'uranyle à valoriser, caractérisé en ce que, dans le but d'obtenir une séparation aisée de la phase aqueuse désuranisée du solvant d'extraction du nitrate d'uranyle :

a) on effectue la dissolution de l'UF$_4$ en deux étapes à une température comprise entre 60 et 110 °C et sous agitation pendant au moins 0,5 h pour chacune des étapes :

la première étape consistant à introduire une quantité d'acide nitrique au plus égale à 0,9 fois la quantité cumulée dans les deux étapes, une quantité du composé d'aluminium au plus égale à 0,95 fois la quantité stœchiométrique correspondant à la formation de AlF$_6^{3-}$ pour le fluor engagé,

la deuxième étape consistant à introduire une quantité d'acide nitrique telle que l'acidité libre à l'issue de la deuxième étape est d'au moins égale à 0,5 mole de HNO$_3$ par litre de solution, une quantité du composé d'aluminium telle que la quantité cumulée dans les deux étapes est au moins égale à la quantité stœchiométrique correspondant à la formation de AlF$_6^{3-}$,

b) on extrait le nitrate d'uranyle en mettant en contact le milieu aqueux provenant de la dissolution de UF$_4$ et le solvant d'extraction du nitrate d'uranyle contenant l'ester phosphorique.

2. Procédé de valorisation de l'uranium et des terres rares selon la revendication 1, caractérisé en ce que on soumet à une séparation le milieu aqueux résultant de la dissolution de l'UF$_4$ en deux étapes avant d'effectuer l'extraction par solvant du nitrate d'uranyle.

3. Procédé de valorisation de l'uranium et des terres rares selon l'une quelconque des revendications 1 et 2, caractérisé en ce que la quantité cumulée du composé d'aluminium dans les deux étapes de dissolution est comprise entre 1,15 et 1,50 fois ladite quantité stœchiométrique.

4. Procédé de valorisation de l'uranium et des terres rares selon l'une quelconque des revendications 1 à 3, caractérisé en ce que la quantité cumulée de l'acide nitrique nécessaire à la dissolution dans les deux étapes de l'UF$_4$ impur est telle que l'acidité libre, à l'issue de la deuxième étape, est comprise entre une et cinq moles par litre de solution.

5. Procédé de valorisation de l'uranium et des terres rares selon l'une quelconque des revendications 1 à 4, caractérisé en ce que la quantité du composé d'aluminium dans la première étape de dissolution est choisie dans l'intervalle de 0,60 à 0,90 fois ladite quantité stœchiométrique.

6. Procédé de valorisation de l'uranium et des terres rares selon l'une quelconque des revendications 1 à 5, caractérisé en ce que la quantité d'acide nitrique dans la première étape de dissolution est comprise entre 0,5 et 0,75 fois la quantité cumulée.

7. Procédé de valorisation de l'uranium et des terres rares selon l'une quelconque des revendications 1 à 6, caractérisé en ce que la température de dissolution de l'$UF_4$ est comprise entre 70 °C et 90 °C.

8. Procédé de valorisation de l'uranium et des terres rares selon l'une quelconque des revendications 1 à 7, caractérisé en ce que le temps d'agitation, lors de l'exécution de la première étape de dissolution, est compris entre 1 heure et 12 heures et, préférentiellement entre 1 heure et 5 heures.

9. Procédé de valorisation de l'uranium et des terres rares selon l'une quelconque des revendications 1 à 8, caractérisé en ce que le temps d'agitation, lors de l'exécution de la deuxième étape de dissolution, est compris entre 0,5 heure et 12 heures et, préférentiellement entre 1 heure et 5 heures.

10. Procédé de valorisation de l'uranium et des terres rares selon l'une quelconque des revendications 1 à 9, caractérisé en ce que le composé d'aluminium est choisi parmi le chlorure d'aluminium, le nitrate d'aluminium, le sulfate d'aluminium, l'alumine et l'hydroxyde d'aluminium.

11. Procédé de valorisation de l'uranium et des terres rares selon l'une quelconque des revendications 1 à 10, caractérisé en ce que le milieu aqueux résultant de la dissolution en deux étapes est refroidi à une température comprise entre 20 °C et 80 °C, de préférence comprise entre 30 °C et 60 °C.

12. Procédé de valorisation de l'uranium et des terres rares selon l'une quelconque des revendications 1 à 11, caractérisé en ce que l'ester phosphorique contenu dans le solvant d'extraction du nitrate d'uranyle est le tributylphosphate.

13. Procédé de valorisation de l'uranium et des terres rares selon les revendications 1 et 12, caractérisé en ce que l'ester phosphorique est mis en solution dans un hydrocarbure choisi parmi l'hexane, le dodécane et les kérosènes provenant des coupes de distillation du pétrole.

14. Procédé de valorisation de l'uranium et des terres rares selon les revendications 1, 12 et 13, caractérisé en ce que le solvant d'extraction contient 20 à 50 %, de préférence 30 à 40 % en volume d'ester phosphorique.

15. Procédé de valorisation de l'uranium et des terres rares selon l'une quelconque des revendications 1 à 14, caractérisé en ce que le nitrate d'uranyle contenu dans le solvant d'extraction est réextrait au moyen d'une solution aqueuse faiblement acide.

16. Procédé de valorisation de l'uranium et des terres rares selon l'une quelconque des revendications 1 à 15, caractérisé en ce qu'on précipite les terres rares du milieu aqueux désuranié au moyen d'un agent alcalin.

## Claims

1. A process for making into useful products the uranium and rare earths contained in impure uranium tetrafluoride resulting from the recovery of uranium from phosphoric acid, comprising dissolving it in a hot condition in a nitric medium in the presence of an aluminium compound, treating the resulting solution with an organic solvent for extracting uranyl nitrate, which contains a phosphoric ester, and separating from the aqueous phase from which the uranium is removed, the solvent which is charged with uranyl nitrate to be made into a useful product, characterised in that, in order to achieve easy separation fo the aqueous phase from which the uranium has been removed, from the uranyl nitrate extraction solvent :

a) the operation of dissolution of $UF_4$ is carried out in two steps at a temperature comprised between 60 and 110 °C in an agitated condition during at least 0,5 h in each step :

the first step comprising introducing an amount of nitric acid at most equal to 0,9 times the combined amount used in the two steps, an amount of the aluminium compound at most equal to 0,95 times the stoichiometric amount corresponding to the formation of $AlF_6^{3-}$ for the fluorine involved ;

the second step comprising introducing an amount of nitric acid such that the free acidity at the discharge of the second step is at least equal to 0,5 mol of $HNO_3$ per liter of solution, an amount of the aluminium compound such that the combined amount in the two steps is at least equal to the stoichiometric amount corresponding to the formation of $Alf_6^{3-}$ ;

b) the uranyl nitrate is extracted by bringing into contact the aqueous medium resulting from the dissolution of $UF_4$ and the uranyl nitrate extraction solvent containing the phosphoric ester.

2. A process for making uranium and rare earths into a useful product, according to claim 1, characterised by subjecting to a separation operation the aqueous medium resulting from the dissolution of $UF_4$ in two steps before effecting solvent extraction of the uranyl nitrate.

3. A process for making uranium and rare earths into a useful product, according to either one of claims 1 and 2, characterised in that the combined amount of the aluminium compound in the two dissolution steps is comprised between 1,15 and 1,5 times the said stoichiometric amount.

4. A process for making uranium and rare earths into a useful product, according to any one of claims 1 to 3, characterised in that the combined amount of nitric acid required for two-step dissolution of the impure $UF_4$ is such that the free acidity, at, the discharge from the second step, is comprised between one and five mols per litre of solution.

5. A process for making uranium and rare earths into a useful product, according to any one of claims 1 to 4, characterised in that the amount of aluminium compound in the first dissolution step is so selected as to fall in the range of from 0.60 to 0.90 times said stoichiometric amount.

6. A process for making uranium and rare earths into a useful product, according to any one of claims 1 to 5, characterised in that the amount of nitric acid in the first dissolution step is comprised between 0.5 and 0.75 times said combined amount.

7. A process for making uranium and rare earths into a useful product, according to any one fo claims 1 to 6, characterised in that he $UF_4$ dissolution temperature is between 70 °C and 90 °C.

8. A process for making uranium and rare earths into a useful product, according to any one of claims 1 to 7, characterised in that the agitation period in carrying out the first dissolution step is between 1 hour and 12 hours and preferably between 1 hour and 5 hours.

9. A process for making uranium and rare earths into a useful product, according to any one of claims 1 to 8, characterised in that the agitation time in carrying out the second dissolution step is between 0.5 hour and 12 hours and preferably between 1 hour and 5 hours.

10. A process for making uranium and rare earths into a useful product, according to any one of claims 1 to 9, characterised in that the aluminium compound is selected amoung aluminium chloride, aluminium nitrate, aluminium sulphate, alumina and aluminium hydroxide.

11. A process for making uranium and rare earths into a useful product, according to any one of claims 1 to 10, characterised in that the aqueous medium resulting from the two-step dissolution operation is cooled at a temperature of from 20 °C to 80 °C, preferably from 30 °C to 60 °C.

12. A process for making uranium and rare earths into a useful product, according to any one of claims 1 to 11, characterised in that the phosphoric ester contained in the uranyl nitrate extraction solvent is tributyl phosphate.

13. A process for making uranium and rare earths into a useful product, according to claims 1 and 12, characterised in that the phosphoric ester is put into solution in a hydrocarbon selected among hexane, dodecane and kerosines, resulting from petroleum distillation cuts.

14. A process for making uranium and rare earths into a useful product, according to claims 1, 12 and 13, characterised in that the extraction solvent contains from 20 to 50 %, preferably from 30 to 40 % by volume of phosphoric ester.

15. A process for making uranium and rare earths into a useful product, according to any one of claims 1 to 14, characterised in that the uranyl nitrate contained in the extraction solvent is reextracted by means of a weakly acid aqueous solution.

16. A process for making uranium and rare earths into a useful product, according to any one of claims 1 to 15, characterised in that the rare earths are precipitated from the aqueous medium from which the uranium has been removed, by means of an alkaline agent.

**Patentansprüche**

1. Verfahren zur Gewinnung des Urans und der Seltenen Erden, die im unreinen Urantetrafluorid enthalten sind, das von der Urangewinnung aus der Phosphorsäure stammt, bestehend aus dessen Auflösung in der Wärme in einem salpetersauren Medium in Gegenwart einer Aluminiumverbindung, aus der Behandlung der erhaltenen Lösung mit einem organischen Lösungsmittel, das einen Phosphorsäureester enthält, zur Extraktion des Uranylnitrats und aus der Trennung des mit zu gewinnendem Uranylnitrat beladenen Lösungsmittels von der enturanierten wässerigen Phase, dadurch gekennzeichnet, daß man zwecks Erhaltens einer leichten Trennung des Lösungsmittels zur Extraktion des Uranylnitrats von der enturanierten wässerigen Phase :

a) die Auflösung des $UF_4$ in zwei Stufen bei einer Temperatur im Bereich von 60 bis 110 °C und unter Umrühren während wenigstens 0,5 h für jede der Stufen vornimmt,

wobei die erste Stufe darin besteht, eine höchstens dem 0,9-fachen der in den beiden Stufen kumulierten Menge gleiche Salpetersäuremenge und eine höchstens dem 0,95-fachen der der Bildung von $ALF_6^{3-}$ für das eingesetzte Fluor entsprechenden stöchiometrischen Menge gleiche Menge der Aluminiumverbindung einzuführen, und

die zweite Stufe darin besteht, eine solche Salpetersäuremenge, daß die freie Azidität am Ausgang der zweiten Stufe wenigstens gleich 0,5 Mol $HNO_3$ je Liter Lösung ist, und eine solche Menge der Aluminiumverbindung einzuführen, daß die in den beiden Stufen kumulierte Menge wenigstens gleich der der Bildung von $ALF_6^{3-}$ entsprechenden stöchiometrischen Menge ist, und

b) das Uranylnitrat extrahiert, indem man das von der $UF_4$-Auflösung kommende wässerige Medium in Kontakt mit dem den Phosphorsäureester enthaltenen Lösungsmittel zur Extraktion des Uranylnitrats bringt.

2. Verfahren zur Gewinnung des Urans und der Seltenen Erden nach Anspruch 1, dadurch gekennzeichnet, daß man das von der Auflösung des $UF_4$ erhaltene wässerige Medium einer trennung in zwei Stufen unterwirft, bevor man die Extraktion des Uranylnitrats durch Lösungsmittel vornimmt.

3. Verfahren zur Gewinnung des Urans und der Seltenen Erden nach Anspruch 1 oder 2, dadurch gekennzeichnet, daß die in den beiden Auflösungsstufen kumulierte Menge der Aluminiumverbindung im Bereich vom 1,15- bis zum 1,50-fachen der genannten stöchiometrischen Menge liegt.

4. Verfahren zur Gewinnung des Urans und der Seltenen Erden nach einem der Ansprüche 1 bis 3, dadurch gekennzeichnet, daß die zur Auflösung des unreinen UF$_4$ in den zwei Stufen erforderlichekumulierte Menge der Salpetersäure derart ist, daß die freie Azidität am Ausgang der zweiten Stufe im Bereich von 1 bis 5 Molen je Liter Lösung liegt.

5. Verfahren zur Gewinnung des Urans und der Seltenen Erden nach einem der Ansprüche 1 bis 4, dadurch gekennzeichnet, daß die Menge der Aluminiumverbindung in der ersten Auflösungsstufe im Bereich vom 0,60- bis zum 0,90-fachen der genannten stöchiometrischen Menge gewählt wird.

6. Verfahren zur Gewinnung des Urans und der Seltenen Erden nach einem der Ansprüche 1 bis 5, dadurch gekennzeichnet, daß die Salpetersäuremenge in der ersten Auflösungsstufe im Bereich vom 0,5- bis 0,75-fachen der kumulierten Menge liegt.

7. Verfahren zur Gewinnung des urans und der Seltenen Erden nach einem der Ansprüche 1 bis 6, dadurch gekennzeichnet, daß die Auflösungstemperatur des UF$_4$ im Bereich von 70 °C bis 90 °C liegt.

8. Verfahren zur Gewinnung des Urans und der Seltenen Erden nach einem der Ansprüche 1 bis 7, dadurch gekennzeichnet, daß die Umrührzeit bei der Durchführung der ersten Auflösungsstufe im Bereich von 1 Stunde bis 12 Stunden, vorzugsweise von 1 Stunde bis 5 Stunden liegt.

9. Verfahren zur Gewinnung des Urans und der Seltenen Erden nach einem der Ansprüche 1 bis 8, dadurch gekennzeichnet, daß die Umrührzeit bei der Durchführung der zweiten Auflösungsstufe im Bereich von 0,5 Stunde bis 12 Stunden, vorzugsweise von 1 Stunde bis 5 Stunden liegt.

10. Verfahren zur Gewinnung des Urans und der Seltenen Erden nach einem der Ansprüche 1 bis 9, dadurch gekennzeichnet, daß die Aluminiumverbindung unter dem Aluminiumchlorid, dem Aluminiumnitrat, dem Aluminiumsulfat, dem Aluminiumoxid und dem Aluminiumhydroxid gewählt wird.

11. Verfahren zur Gewinnung des Urans und der Seltenen Erden nach einem der Ansprüche 1 bis 10, dadurch gekennzeichnet, daß das von der Auflösung in zwei Stufen stammende wässerige Medium auf eine Temperatur im Bereich von 20 °C bis 80 °C, vorzugsweise von 30 °C bis 60 °C abgekühlt wird.

12. Verfahren zur Gewinnung des Urans und der Seltenen Erden nach einem der Ansprüche 1 bis 11, dadurch gekennzeichnet, daß der im Lösungsmittel zur Extraktion des Uranylnitrats enthaltene Phosphorsäureester das Tributylphosphat ist.

13. Verfahren zur Gewinnung des Urans und der Seltenen Erden nach den Ansprüchen 1 und 12, dadurch gekennzeichnet, daß der Phosphorsäureester in einem Kohlenwasserstoff in Lösung gebracht wird, der unter dem Hexan, dem Dodekan und den von den Destillationsschnitten des Petroleums stammenden Kerosinen gewählt ist.

14. Verfahrens zur Gewinnung des Urans und der Seltenen Erden nach den Ansprüchen 1, 12 und 13, dadurch gekennzeichnet, daß das Extraktionslösungsmittel 20 bis 50 Vol.%, vorzugsweise 30 bis 40 Vol.%, Phosphorsäureester enthält.

15. Verfahren zur Gewinnung des Urans und der Seltenen Erden nach einem der Ansprüche 1 bis 14, dadurch gekennzeichnet, daß das im Extraktionslösungsmittel enthaltene Uranylnitrat mittels einer schwach sauren wässerigen Lösung reextrahiert wird.

16. Verfahren zur Gewinnung des Urans und der Seltenen Erden nach einem der Ansprüche 1 bis 15, dadurch gekennzeichnet, daß man die Seltenen Erden aus dem enturanierten wässerigen Medium mithilfe eines alkalischen Mittels ausfällt.